# EUROPÄISCHE PATENTANMELDUNG

(11) **EP 0 879 787 A2**
(43) Veröffentlichungstag der Anmeldung: **25.11.1998**
(21) Anmeldenummer: 98108010.4
(22) Anmeldetag: 02.05.1998
(51) Int. Cl.: B66F 15/00, B62B 3/06

(54) **Vorrichtung zum Heben eines Flügels**

(30) Priorität: 22.05.1997 DE 29709570 U
(71) Anmelder: B. & K. Baumgärtel GmbH, 07552 Gera (DE)
(72) Erfinder: Seibert, Wolfgang, 13583 Berlin (DE)
(74) Vertreter: Amthor, Manfred W. J.

(57) **Zusammenfassung**

Zwei V-förmig, vertikal übereinander angeordnete Schenkel (9,10), sind im Bereich ihres nach unten gerichteten Schnittpunktes (12) mit einer bodenseitigen Rollvorrichtung (14,15) ausgestattet, während der nach oben gerichtete freie V-Schenkel (10) über einen Tragestempel den Flügelkorpus (2) trägt, indem er sich über den nach unten gerichteten freien V-Schenkel (9) und die bodenseitige Rollvorrichtung (14,15) dreipunktartig am Boden lagestabil abstützt.

Durch eine taumelnde Lagerung (24) des Tragestempels ist eine kantenfreie Abstützung des Korpus (2) auf dem Tragestempel über dem ganzen Bogenmaß des freien V-Schenkels (9,10), sowie insbesondere eine stabile finale Hubposition der Vorrichtung (7), ermöglicht.

Die auf dem freien V-Schenkel (10) axial einstellbare Position des Tragestempels dient, neben der fixierten Länge und Winkellage beider V-Schenkel (9,10) zueinander, der Einstellung einer jeweils optimalen effektiven Hubhöhe der Vorrichtung (7).

Die manuelle Vorrichtung ist erfindungsgemäß besonders einfach, schnell und sicher handhabbar.

## Beschreibung

Die Erfindung bezieht sich auf eine Vorrichtung zum Heben eines Flügels, dessen Korpus mittels lösbar verbundener Füße auf einer Stellfläche mit bestimmtem Abstand gehalten ist, mit einem den Korpus unterseitig stützenden Tragkörper, der sich seinerseits über einen den Abstand zwischen Korpus und Stellfläche vergrössernden Tragstempel auf der Stellfläche abstützt.

Zum Heben eines Flügels ist es beispielsweise aus der US-PS 4 127 958 bekannt, an der Unterseite des Flügelkorpus einen rahmenartigen Tragkörper anzuordnen, der mit einem Huborgan zusammenwirkt. Das Huborgan besteht beim Bekannten aus zwei an ihren einen freien Seiten gelenkig verbundenen, spitzwinklig zueinander angeordneten Strebrahmen, deren Gelenk mit dem rahmenartigen Tragkörper koppelbar ist. An den dem Gelenk abgewandten Strebrahmenseiten sind auf der Stellfläche abrollende Radpaare und ein beide Rahmenseiten verbindender Spindeltrieb mit einer Antriebskurbel vorgesehen. Zur Erzeugung einer Hubbewegung wird der Spindeltrieb zwischen den dem Gelenk abgewandten Strebrahmenseiten verkürzt; zum Absenken des Korpus wird mittels der Antriebskurbel der Spindeltrieb verlängert.
Anstelle des aus der US-PS 4 122 958 bekannten Strebrahmens kann auch ein aus einer hydraulischen Pumpvorrichtung mit einem beweglichen Tragstempel bewegliches Huborgan verwendet werden, wie dies beispielsweise aus der US-PS 4 475 714 bekannt ist.

Beide bekannten Vorrichtungen zum Heben eines Flügels erfordern zeitaufwendige Vorbereitungsarbeiten, die ihren Einsatz als Schnellheber bei Reparatur-, Wartungs- und Transportarbeiten beeinträchtigen.

Davon ausgehend liegt der Erfindung die Aufgabe zugrunde, eine Vorrichtung der eingangs genannten Art anzugeben, die mit geringem Zeitaufwand schnell gehandhabt werden kann.

Nach der Erfindung wird diese Aufgabe gelöst durch eine im wesentlichen V-förmige Stütze, deren V-Schenkel etwa gleichlang ausgebildet sind und zwischen sich einen Winkel von weniger als 90' einschließen, die im Bereich der V-Spitze über Rollen und im Bereich des freien Endes des ersten V-Schenkels zum Kontakt mit der Stellfläche bestimmt ist und deren zweiter V-Schenkel den Tragstempel bildet und an seinem freien Ende mit dem Tragkörper verbunden ist.
Durch Anwendung der Erfindung ergibt sich ein Schnellheber, der nach dem Unterfahren des Korpus den als Tragstempel ausgebildeten zweiten V-Schenkel bezüglich der Rollen aus einer Untertotpunktlage in eine Übertotpunktlage überführen kann, wobei sich der erste V-Schenkel auf der Stellfläche abstützt. Der Flügelkorpus wird dabei über den für Reparatur- und Wartungsarbeiten notwendigen Hub hinaus angehoben und in der Übertotpunktlage ohne weiteres gehalten.

Es hat sich für die Erfindung in einer vorteilhaften Ausführungsform als zweckmäßig erwiesen, wenn der Tragkörper mit dem Tragstempel taumelnd verbunden ist. Damit wird die Bewegung der Vorrichtung über die Totpunktlage hinweg erleichtert.
Da die Korpushöhe in zwar engen Grenzen festgelegt ist, aber dennoch variiert, ist es vorteilhaft, die wirksame, den Hub bestimmende Länge dadurch anpassen zu können, daß der Tragkörper mit dem Tragstempel über einen in dessen Achse verlaufenden Gewindebolzen längsverstellbar verbunden ist. Im Gegensatz zum bekannten Spindelantrieb dient der Gewindebolzen nicht zur Erzeugung der Hubbewegung, sondern zur Festlegung des Hubes. Ein besonderer Vorteil der erfindungsgemäßen Ausführungsform ergibt sich, wenn der erste Schenkel der V-förmigen Stütze an seinem freien Ende mit einem zur Anlage mit der Stellfläche bestimmten Stützkörper ausgestattet ist. Der Stützkörper kann dabei mit einem einen sicheren Stand gewährleistenden Reibbelag ausgestattet sein; der Stützkörper bestimmt gemeinsam mit dem voreingestellten Gewindebolzen einerseits den Hub des zu hebenden Korpus und andererseits die sichere Übertotpunktlage.

Zur Erleichterung der Handhabung der erfindungsgemäßen Vorrichtung kann die V-förmige Stütze im Bereich des freien Endes des ersten V-Schenkels mit einem Handbetätigungsgriff versehen sein.

Wenn die im Bereich der V-Spitze angeordneten Rollen in einem Abstand, z.B. von 25 cm, voneinander auf einer gemeinsamen, quer zum Tragstempel verlaufenden Achse sitzen, ist die vertikale Orientierung des Tragstempels mit Vorteil gewährleistet.
Anhand der Zeichnung ist ein Ausführungsbeispiel der erfindungsgemäßen Vorrichtung zum Heben eines Flügels beschrieben und die Wirkungsweise erläutert.
In Fig. 1 ist die erfindungsgemäße Vorrichtung in einer Seitenansicht schematisch dargestellt.
In Fig. 2 ist eine vergrößerte, teilweise geschnittene Darstellung als Einzelheit aus Fig. 1 gezeigt;
die Fig. 3 zeigt eine zur Fig. 2 zugehörige Draufsicht.

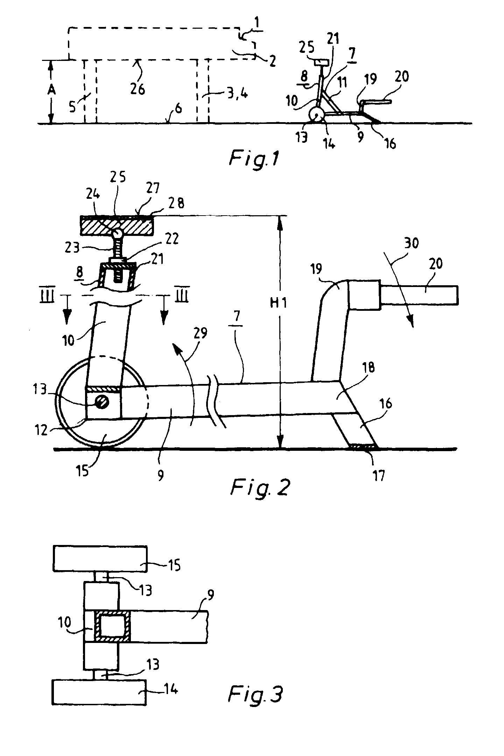

In Fig. 1 ist gestrichelt ein Flügel 1 schematisch gezeichnet, dessen Korpus 2 mit drei Füßen 3,4,5 auf einer Stellfläche 6 mit Abstand A abgestellt ist. Zum Heben des Korpus 2 dient die erfindungsgemäße Vorrichtung 7.
Diese Vorrichtung 7 besteht, wie die Figuren 1 und 2 zeigen, aus einer im wesentlichen V-förmigen Stütze 8 mit einem ersten V-Schenkel 9 und einem zweiten V-Schenkel 10, die beide etwa gleich lang ausgebildet sind. Die beiden V-Schenkel 9,10 schließen zwischen sich einen Winkel von weniger als 90', vorzugsweise 80' bis 85', ein und sind über mindestens eine Strebe 11 biege- und verdrehungssteif miteinander verbunden. Die V-för'inige Stütze 8 ist bevorzugt aus einem metallischen quadratischen Hohlprofil gefertigt. Quer zu dem von den V-Schenkeln 9,10 und der Strebe 11 gebildeten Rahmen ist im Bereich der V-Spitze 12 eine transversal zur Rahmenebene verlaufende Achse 13 vorgesehen, die zwei in einem Abstand von etwa 20 - 25 cm voneinander angeordnete Rollen 14,15 trägt. Die Achse 13 ist mittig mit den V-Schenkeln 9,10 starr verbunden.

Der erste V-Schenkel 9 bildet mit einem abgewinkelten Schenkelteil 16 einen zur Anlage mit der Stellfläche 6 bestimmten Stützkörper 17. Ein an diesem ersten V-Schenkel 9 am achsfernen freien Ende 18 vorgesehener, abgewinkelter Fortsatz 19 ist mit einem Handbetätigungsgriff 20 versehen.
Der zweite V-Schenkel 10 bildet den Tragstempel zum Heben des Flügels 1. Er weist an seinem freien Ende 21 eine Gewindemutter 22 auf, die von einem Gewindebolzen 23 durchsetzt ist. Der Gewindebolzen 23 ist seinerseits über ein eine Taumelbewegung ermöglichendes Lager 24 mit einem Tragkörper 25 verbunden, dessen zur Anlage mit der Unterseite 26 des Korpus 2 bestimmte Fläche 27 mit einem Polster 28, z.B. aus einer Filz- oder Gummischicht, versehen ist.

In Fig. 3 ist die Draufsicht auf die Vorrichtung nach Fig. 2 dargestellt, wobei gleiche Teile mit gleichen Bezugszeichen versehen sind.

Der Abstand A zwischen der Stellfläche 6 und der Unterseite 26 des Korpus 2 bestimmt die Höhe der nicht weiter dargestellten Tastatur des Flügels 1 in dessen Normalstellung; soll der Flügel, z.B. zum Entfernen des Fußes 3, angehoben werden, ist die Höhe H1 größer als der Abstand A zu wählen und mittels des Gewindebolzens 23 durch eine Drehbewegung einzustellen. Sodann wird durch Anheben des Handbetätigungsgriffes 20 die Vorrichtung 7 in Pfeilrichtung 29 um etwa 30' verschwenkt. Die Vorrichtung 7 wird danach unter den Korpus 2 gerollt und der Tragkörper 25 mit dem Polster 28 wird mit der Unterseite 26 des Korpus 2 zur Anlage gebracht. Der Flügel 1 wird durch eine Absenkbewegung des Handbetätigungsgriffes 20 in Pfeilrichtung 30 angehoben. Bis zum Erreichen der in Fig. 1 dargestellten Position, in der der Stützkörper 17 die Stellfläche 6 berührt, wird die Vorrichtung von einer Untertotpunktlage über einen Totpunkt in eine stabile Übertotpunktlage überführt, die über die wirksame Höhe den Hub H bestimmt. Hierdurch ist der Korpus 2 über seine Normalstellung hinaus angehoben.

Zum Absenken des Flügels 1 nach dem Montieren des Fußes 3 verläuft die Bewegung der Vorrichtung 7 in gegenüber dem zuvor beschriebenen Anheben umgekehrter Folge.

### Bezugszeichenliste

- 1: Flügel
- 2: Korpus
- 3: Fuß
- 4: Fuß
- 5: Fuß
- 6: Stellfläche
- 7: Vorrichtung
- 8: Stütze
- 9: erster V-Schenkel
- 10: zweiter V-Schenkel
- 11: Strebe
- 12: V-Spitze
- 13: Achse
- 14: Rolle
- 15: Rolle
- 16: Schenkelteil
- 17: Stützkörper
- 18: freies Ende
- 19: Fortsatz
- 20: Handbetätigungsgriff
- 21: freies Ende
- 22: Gewindemutter
- 23: Gewindebolzen
- 24: Lager
- 25: Tragkörper
- 26: Unterseite
- 27: Fläche
- 28: Polster
- 29: Pfeilrichtung
- 30: Pfeilrichtung

## Patentansprüche

1. Vorrichtung zum Heben eines Flügels, dessen Korpus mittels lösbar verbundener Füße auf einer Stellfläche mit bestimmtem Abstand gehalten ist, mit einem den Korpus unterseitig stützenden Tragkörper, der sich seinerseits über einen den Abstand zwischen Korpus und Stellfläche vergrößernden Tragstempel auf der Stellfläche abstützt, **gekennzeichnet durch** eine im wesentlichen V-förmige Stütze (8), deren V-Schenkel (9,10) etwa gleich lang ausgebildet sind und zwischen sich einen Winkel von weniger als 90 Grad einschließen, die im Bereich der V-Spitze (12) über Rollen (14,15) und im Bereich des freien Endes (18) des ersten V-Schenkels (9) zum Kontakt mit der Stellfläche (6) bestimmt ist und deren zweiter V-Schenkel (10) den Tragstempel bildet und an seinem freien Ende (21) mit dem Tragkörper (25) verbunden ist.

2. Vorrichtung nach Anspruch 1, **dadurch gekennzeichnet**, daß der Tragkörper (25) mit dem Tragstempel (10) taumelnd verbunden ist.

3. Vorrichtung nach Anspruch 1 oder 2, **dadurch gekennzeichnet**, daß der Tragkörper (25) mit dem Tragstempel (10) über einen in dessen Achse verlaufenden Gewindebolzen (23) längsverstellbar verbunden ist.

4. Vorrichtung nach einem der Ansprüche 1 bis 3, **dadurch gekennzeichnet**, daß der erste V-Schenkel (9) der V-förmigen Stütze (8) an seinem freien Ende (18) mit einem zur Anlage mit der Stellfläche (6) bestimmten Stützkörper (17) ausgestattet ist.

5. Vorrichtung nach einem der Ansprüche 1 bis 4, **dadurch gekennzeichnet**, daß die V-förmige Stütze (8) im Bereich des freien Endes (18) des ersten V-Schenkels (9) mit einem Handbetätigungsgriff (20) versehen ist.

6. Vorrichtung nach einem der Ansprüche 1 bis 5, **dadurch gekennzeichnet**, daß die im Bereich der V-Spitze (12) angeordneten Rollen (14,15) in einem die vertikale Orientierung des Tragstempels (10) gewährleistenden Abstand voneinander entfernt auf einer gemeinsamen Achse (13) angeordnet sind.
